# EUROPÄISCHE PATENTSCHRIFT

(11) **EP 1 185 443 B1**
(45) Veröffentlichungstag und Bekanntmachung des Hinweises auf die Patenterteilung: **14.09.2005**
(21) Anmeldenummer: 00990557.1
(22) Anmeldetag: 20.12.2000
(51) Int. Cl.: B60S 1/16

(54) **ELEKTROMOTOR INSBESONDERE WISCHERMOTOR ZUM WISCHEN EINER SCHEIBE EINES KRAFTFAHRZEUGS**
ELECTROMOTOR, ESPECIALLY WIPER MOTOR FOR WIPING THE GLASS SURFACE OF A MOTOR VEHICLE
MOTEUR ELECTRIQUE, NOTAMMENT MOTEUR D'ESSUIE-GLACE PERMETTANT D'ESSUYER UNE VITRE D'AUTOMOBILE

(30) Priorität: 24.03.2000 DE 10014735
(43) Veröffentlichungstag der Anmeldung: 13.03.2002
(73) Patentinhaber: ROBERT BOSCH GMBH, 70442 Stuttgart (DE)
(72) Erfinder: GRASS, Ansgar, 77746 Schutterwald-Langhurst (DE)
(86) Internationale Anmeldenummer: PCT/DE2000/004552
(87) Internationale Veröffentlichungsnummer: WO 2001/072563

(56) Entgegenhaltungen:
- WO-A-98/07601
- WO-A-99/00885
- DE-A- 3 730 900
- DE-A- 4 039 038
- DE-A- 4 324 621
- US-A- 5 929 588

## Beschreibung

### Stand der Technik

Die Erfindung betrifft einen Elektromotor, insbesondere Wischermotor zum Wischen einer Heckscheibe eines Kraftfahrzeugs nach Gattung des unabhängigen Anspruchs. Es sind schon zahlreiche Elektromotoren als Wischermotoren bekannt. Bei diesen weist die Ankerwelle des Elektromotors an einem Ende ein Getriebe mit einem Schneckenrad auf, das ein großes Schneckenrad antreibt. An diesem Schneckengetriebe ist ein Umsetzgetriebe angeordnet, das die drehende Bewegung des Zahnrades in eine pendelnde Bewegung einer Wischerwelle umsetzt. Auf der dem Umsetzgetriebe gegenüberliegenden Seite des Schneckenrades ist ein Gebermagnet angeordnet. Ein Hallsensor, der mit einer Elektronik verbunden ist, greift die Position, insbesondere die Parklage des Wischermotors ab. Die Anordnung auf der dem Umsetzgetriebe gegenüberliegenden Seite ist deshalb notwendig, da sich der Gebermagnet in sehr geringem Abstand unter dem Hallsensor hinwegbewegen muß, um eine zuverlässige Parklagenerkennung zu gewährleisten.

Problematisch ist dabei, daß im Fertigungsablauf der Motor einmal umgedreht werden muß, da Umsetzgetriebe und Getriebedeckel auf einer Seite, und das Kunststoffgehäuse mit Leiterplatte und Hallsensor von der gegenüberliegenden Rückseite aus montiert werden müssen.

### Vorteile der Erfindung

Der erfindungsgemäße Elektromotor mit dem kennzeichnenden Merkmalen des Hauptanspruchs hat den Vorteil, daß durch einseitige Anordnung der Getriebeelemente, der Sensoreinrichtung, des Signalgebers und der Leiterplatte das Drehen des Elektromotors während des Fertigungsablaufs entfällt, ohne die Zuverlässigkeit der Parklagenerkennung zu reduzieren, was eine wesentliche Vereinfachung und damit Kostenersparnis darstellt. Das Getriebegehäuse kann so einseitig mit dem Schneckenrad, dem Umsetzgetriebe und der Sensoreinrichtung bestückt werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Sensoreinrichtung mindestens einen Hallsensor und der Signalgeber mindestens einen Gebermagnet aufweist. Hallsensoren und Gebermagnete sind als billige Massenware in gleichbleibender Qualität erhältlich.

Ein weiterer Vorteil ergibt sich dann, wenn Signalgeber und Umsetzgetriebe auf der gleichen Seite des Schneckenrades angeordnet sind, da dadurch eine schnelle Montage und bestmögliche Zugänglichkeit im Reparaturfall gewährleistet ist.

Sind die elektrischen Zuleitungen der Sensoreinrichtung derart geformt, daß der Abstand zwischen Signalgeber und Sensoreinrichtung minimal ist, so ergibt sich ein weiterer Vorteil, da durch einen geringen Abstand die Sensoreinrichtung zuverlässig detektieren kann und durch die Formung der Zuleitungen keine weiteren Halterungen für die Sensoreinrichtungen benötigt werden.

Insbesondere ist es vorteilhaft, eine flexible Leiterplatte derart zu formen, daß der Abstand zwischen Signalgeber und Sensoreinrichtung minimal ist. Auf diese Weise ist eine optimale Signalqualität gewährleistet, wobei eine flexible Leiterplatte wiederum zuläßt, daß keine weiteren Halteelemente für die Sensoreinrichtung benötigt werden.

Wird die Sensoreinrichtung von einem, in räumlich spritzgegossener Schaltungsträgertechnologie (auf MID) hergestellten Kunststoffteil getragen, sind ebenfalls keine weiteren Halteelemente für die Sensoreinrichtung notwendig, insbesondere dann, wenn das Kunststoffteil gleichzeitig als Deckel dient.

Weist das Getriebe darüber hinaus eine Ruhestellung auf, bei welcher der Abstand zwischen Umsetzgetriebe und Signalgeber maximal ist, wird der magnetische Fluß des Gebermagneten nicht durch das magnetische Material des Umsetzgetriebes kurzgeschlossen wodurch auch Remanenzerscheinungen im Umsetzgetriebe vermieden werden.

Insbesondere ist es Vorteilhaft, wenn in einer der Ruhestellung entsprechenden Parklage der Abstand zwischen Signalgeber und Sensoreinrichtung ein Minimum aufweist. Dies ist gerade dann der Fall, wenn der Gebermagnet unter dem Hallsensor zu liegen kommt, so daß dieser ein Schaltsignal (LOW-Pegel) abgibt, wenn die Parklage erreicht ist.

Weiterhin ist vorteilhaft das Umsetzgetriebe aus einem unmagnetischen Material herzustellen, da auf diese Weise Remanenzerscheinungen völlig ausgeschlossen werden können. Insbesondere kann in diesem Falle deshalb auch der Gebermagnet in der Ruhelage im Bereich des Umsetzgetriebes angeordnet sein.

### Zeichnung

Ausführungsbeispiele der Erfindung sind in den Zeichnungen dargestellt und in der nachfolgenden Beschreibung näher erläutert.

Es zeigen:
Figur 1 einen schnitt durch einen erfindungsgemäßen Elektromotor,
Figur 2 einen Schnitt entlang der Linie II-II in Figur 1 in schematischer Darstellung,
Figur 3 einen Schnitt entsprechend Figur 2 durch ein zweites Ausführungsbeispiel und
Figur 4 einen Schnitt entsprechend Figur 2 durch ein drittes Ausführungsbeispiel.

### Beschreibung der Ausführungsbeispiele

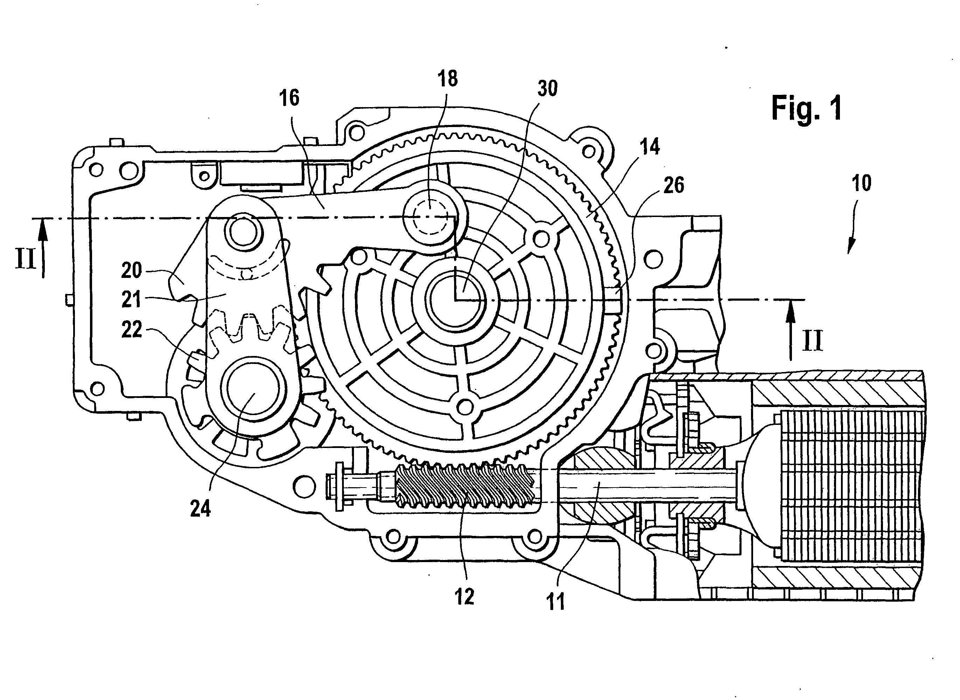

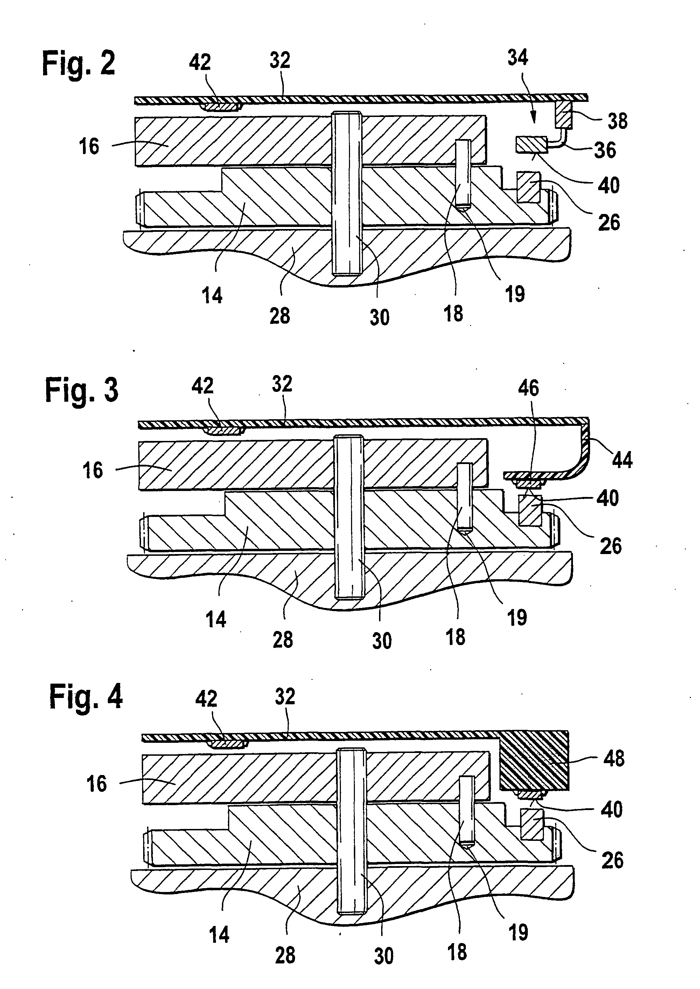

In Fig. 1 ist ein Schnitt eines erfindungsgemäßen Elektromotors 10 in einer Draufsicht dargestellt. Eine Ankerwelle 11 trägt eine Schnecke 12, die ein Schneckenrad 14 antreibt. Eine Schubstange 16 ist an einem Ende drehfest mit einem Gelenkbolzen 18 verbunden, der in eine Aussparung 19 (Figur 2) am Schneckenrad 14 exzentrisch eingreift. Am anderen Ende weist die Schubstange 16 einen mit Zähnen versehenen Zahnsektor 20, als Teil eines Zahnrades auf. Das Zentrum dieses Zahnsektors 20 ist über einen Steg 21 drehbar mit einer Wischerwelle 24 verbunden, welche wiederum drehfest mit einem Ritzel 22 verbunden ist und zwar so, daß der Zahnsektor 20 und Ritzel 22 in Eingriff stehen.

Durch eine Drehbewegung der Ankerwelle 11 wird über die Schnecke 12 das Schneckenrad 14 angetrieben. Dadurch wird die Schubstange 16 bewegt, welche über ihren Zahnsektor 20 das Ritzel 22 antreibt. Schubstange 16, Gelenkbolzen 18 und Steg 21 bilden so gemeinsam ein Umsetzgetriebe das die kurbelartige Bewegung der Schubstange 16 in eine pendelnde Bewegung der Wischerwelle 24 umsetzt.

Auf der Seite des Schneckenrades 14, auf der der Gelenkbolzen 18 mit der Schubstange 16 angeordnet sind, ist auch ein Gebermagnet 26 befestigt. Dieser ist so in das Schneckenrad 14 eingelassen oder integriert, daß er die Bewegung des Umsetzgetriebes nicht behindert, insbesondere bei jeder Bewegung unter der Schubstange 16 hinwegläuft.

Das in Figur 2 dargestellte Getriebegehäuse 28 weist einen drehfest mit dem Getriebegehäuse 28 verbundenen Gehäusebolzen 30 auf, der das Schneckenrad 14 trägt. Im Schneckenrad 14 sitzt der Gelenkbolzen 18 in einer Aussparung 19 und ist darin drehbar gelagert. Der Gelenkbolzen 18 ist drehfest mit der Schubstange 16 des Umsetztgetriebes verbunden, jedoch ist dies auch umgekehrt möglich, dann ist der Gelenkbolzen 18 drehfest am Schneckenrad 14 und drehbar an der Schubstange 16 befestigt.

Am Rand des Schneckenrads 14 ist ein Gebermagnet 26 angeordnet, der als Signalgeber dient. Eine Leiterplatte 32, die im Deckel des Getriebegehäuses 28 angeordnet ist, weist eine Leistungselektronik zur Steuerung des Elektromotors 10 auf.

Zur Detektion der Parklage des Elektormotors 10 ist an der Leiterplatte 32 ein bedrahteter Hallsensor als Sensoreinrichtung 34 angeordnet, die die Signale des Gebermagneten 26 aufnimmt.

Um die Parklage zuverlässig zu erkennen muß der Hallsensor 34 möglichst nahe am Gebermagneten 26 angeordnet sein und gleichzeitig nicht in den Bewegungsraum des Umsetzgetriebes reichen. Typischerweise wird ein Abstand von ca. 2 mm zwischen Hallsensor 34 und Gebermagnet 26 gewählt, da bei wesentlich kleineren Abständen die Gefahr einer Beschädigung bei Erschütterungen nicht auszuschließen ist. Diese Gefahr kann jedoch bei geeigneter Konstruktion und Materialwahl reduziert werden.

Der Hallsensor 34 ist auf die Leiterplatte 32 gelötet und ragt mittels seiner Anschlußdrähte 36 in den vom Umsetztgetriebe nicht tangierten Raum hinein. Die Anschlußdrähte 36 sind derart abgebogen, daß der Abstand zwischen Gebermagneten 26 als Signalgeber und Hallsensor 34 als Sensoreinrichtung minimal ist. Es braucht nicht extra erwähnt zu werden, daß auch beispielsweise funktionslose Zwischenstücke 38 als Verlängerung der Anschlußdrähte 36 verwendet werden können. Das eigentliche Hallelement selbst ist in ein kleines Gehäuse eingegossen und die Anschlußdrähte 36 des Hallsensors sind derart abgewinkelt, daß sich die aktive Hallsensorfläche 40 parallel zum Gebermagneten befindet. Auf der Leiterplatte 32 sind typischerweise noch weitere Bauelemente 42 angeordnet, die insbesondere auch in SMD-Technologie ausgeführt sein können.

Fig. 3 zeigt den gleichen Schnitt wie Figur 2, jedoch in einer Variation des Ausführungsbeispiels. Ein Getriebegehäuse 28 weist einen Gehäusebolzen 30 auf, der im Getriebegäuse 28 drehfest angeordnet ist und das Schneckenrad 14 trägt.

Über der Schubstange 16 ist die Leiterplatte 32 angeordnet, an die an einem Ende eine flexible Leiterplatte 44 angefügt ist. Diese flexible Leiterplatte 44 trägt einen Hallsensor 46, der insbesondere in SMD-Technologie hergestellt ist.

Die flexible Leiterplatte 44 ragt etwa senkrecht aus der Leiterplatte 32 heraus und weist eine insbesondere rechtwinklige Biegung auf, welche die aktive Sensorfläche 40 des SMD-Hallsensors 46 nahe genug an den Gebermagnet 26 hinführt.

Möglich ist es jedoch auch die gesamte Leiterplatte 32 aus flexiblem Material herzustellen und derart zurechtzubiegen, daß der notwendige Abstand zwischen Gebermagnet 26 und Hallsensor 34 gegeben ist.

Sowohl bei dem in Figur 2, wie auch bei dem in Figur 3 dargestellten Ausführungbeispiel ist der Deckel des Getriebes über der Leiterplatte 32 und damit auch über dem Umsetzgetriebe angeordnet.

Fig. 4 zeigt wiederum einen Schnitt wie Figur 2, jedoch in einer weiteren Variation des Ausführungsbeispiels. Das Getriebegäuse 28 weist wiederum einen, darin drehfest befestigten Gehäusebolzen 30 auf, der das Schneckenrad 14 trägt. Der Gelenkbolzen 18 ist drehfest mit der Schubstange 16 verbunden und in das Schneckenrad 14 eingesteckt.

Der Deckel des Getriebegehäuses 28 weist eine Erhebung 48 auf, auf der der Hallsensor 34, der insbesondere in SMD-Technologie hergestellt ist, angeordnet ist.

Die Leiterplatte 32 ist hier in MID-Technologie (Molded Interconnect Device) hergestellt und dient gleichzeitig als Kunststoffdeckel für das Getriebegehäuse 28. Das wesentliche Merkmal der MID-Technologie ist die Verwendung spritzgegossener Teile aus thermoplastischen Kunststoffen als Substrat für den Aufbau elektronischer Schaltungen. Damit ist es insbesondere möglich, der Leiterplatte jede gewünschte Form zu geben und demnach auch den Hallsensor 34 auf einer anderen Ebene als die weiteren Bauelemente 42 der Steuerelektronik anzuordnen. Umgekehrt kann daher auch gesagt werden, daß der Deckel des Getriebes über dem Umsetzgetriebe angeordnet ist und selbst als Leiterplatte 32 dient.

## Patentansprüche

1. Elektromotor (10), insbesondere Wischermotor zum Wischen einer Scheibe eines Kraftfahrzeugs, mit einem, in einem Getriebegehäuse (28) angeordneten Getriebe, das zumindest ein Schneckenrad (14) und ein Umsetzgetriebe (16,18,21) umfasst, einem das Getriebegehäuse (28) verschließenden Deckel und einer Steuerelektronik mit einer, die Stellung des Getriebes erkennenden Sensoreinrichtung (34), die Signale eines an oder in einem beweglichen Teil (14) des Getriebes angeordneten Signalgebers (26) erfasst, **dadurch gekennzeichnet, dass** die Sensoreinrichtung die Stellung des Getriebes berührungslos erfasst und dass Elemente der Sensoreinrichtung (34) im Deckel oder zumindest auf der dem Deckel zugewandten Seite des Getriebes angeordnet sind, so dass während des Fertigungsablaufs das Getriebegehäuse (28) einseitig mit dem Schneckenrad (14), dem Umsetzgetriebe und der Sensoreinrichtung (34) bestückt werden kann.

2. Elektromotor (10) nach Anspruch 1, **dadurch gekennzeichnet, daß** die Sensoreinrichtung (34) mindestens einen Hallsensor (34) und der Signalgeber (26) mindestens einen Gebermagnet aufweist.

3. Elektromotor (10) nach einem der vorhergehenden Ansprüche, **dadurch gekennzeichnet, dass** eine Ankerwelle (11) mit einer, das Schneckenrad (14) antreibenden Schnecke (12) und dem, auf dem Schneckenrad (14) angeordneten, die Rotation des Schneckenrads (14) in eine Pendelbewegung einer Wischerwelle (24) umsetzenden Umsetzgetriebe vorgesehen ist, wobei der Signalgeber (26) und das Umsetzgetriebe auf der gleichen Seite des Schneckenrads (14) angeordnet sind.

4. Elektromotor (10) nach einem der vorhergehenden Ansprüche, **dadurch gekennzeichnet, daß** elektrische Zuleitungen der Sensoreinrichtung (34) derart geformt sind, daß der Abstandes zwischen Signalgeber (26) und Sensoreinrichtung (34) minimal, insbesondere kleiner 2.5 mm, vorzugsweise kleiner oder gleich 2 mm ist.

5. Elektromotor (10) nach einem der vorhergehenden Ansprüche, **dadurch gekennzeichnet, daß** eine, insbesondere flexiblen, Leiterplatte (32) derart geformt ist, daß der Abstand zwischen Signalgeber (26) und Sensoreinrichtung (34) minimal, insbesondere kleiner 2.5 mm, vorzugsweise kleiner oder gleich 2 mm ist.

6. Elektromotor (10) nach einem der vorhergehenden Ansprüche, **dadurch gekennzeichnet, daß** ein Kunststoffteil, insbesondere der Deckel, zumindest die Sensoreinrichtung (34) trägt und in räumlich spritzgegossener Schaltungsträgertechnologie (MID) hergestellt ist, derart geformt ist, daß der Abstandes zwischen Signalgeber (26) und Sensoreinrichtung (34) minimal, insbesondere kleiner 2.5 mm, vorzugsweise kleiner oder gleich 2 mm ist.

7. Elektromotor (10) nach einem der vorhergehenden Ansprüche, **dadurch gekennzeichnet, daß** das Getriebe eine, insbesondere einer Parklage entsprechende, Ruhestellung aufweist, bei welcher der Abstand zwischen Umsetzgetriebe und Signalgeber (34) maximal ist.

8. Elektromotor (10) nach einem der vorhergehenden Ansprüche, **dadurch gekennzeichnet, daß** das Getriebe eine, insbesondere einer Parklage entsprechende, Ruhestellung aufweist, bei welcher der Abstand zwischen Signalgeber (26) und Sensoreinrichtung (34) ein Minimum aufweist.

9. Elektromotor (10) nach einem der Ansprüche 3 bis 8, **dadurch gekennzeichnet, daß** das Umsetzgetriebe aus einem unmagnetischen Material besteht.

## Claims

1. Electric motor (10), in particular wiper motor for wiping a glass pane of a motor vehicle, having a gear mechanism which is arranged in a gear mechanism housing (28) and comprises at least one worm gear (14) and a conversion gear mechanism (16, 18, 21), having a cover which closes the gear mechanism housing (28), and having control electronics with a sensor device (34) which identifies the position of the gear mechanism and detects signals from a signal transmitter (26) which is arranged on or in a moving part (14) of the gear mechanism, **characterized in that** the sensor device detects the position of the gear mechanism in a contactless manner, and **in that** elements of the sensor device (34) are arranged in the cover or at least on that side of the gear mechanism which faces the cover so that the worm gear (14), the conversion gear mechanism and the sensor device (34) can be fitted on one side of the gear mechanism housing (28) during the production process.

2. Electric motor (10) according to Claim 1, **characterized in that** the sensor device (34) has at least one Hall sensor (34) and the signal transmitter (26) has at least one transmitter magnet.

3. Electric motor (10) according to either of the preceding claims, **characterized in that** an armature shaft (11) is provided which has a worm (12), which drives the worm gear (14), and the conversion gear mechanism which is arranged on the worm gear (14) and converts the rotation of the worm gear (14) to an oscillating movement of a wiper shaft (24), the signal transmitter (26) and the conversion gear mechanism being arranged on the same side of the worm gear (14).

4. Electric motor (10) according to one of the preceding claims, **characterized in that** the electrical supply lines of the sensor device (34) are formed in such a way that the distance between the signal transmitter (26) and the sensor device (34) is minimal, in particular less than 2.5 mm, preferably less than or equal to 2 mm.

5. Electric motor (10) according to one of the preceding claims, **characterized in that** an, in particular flexible, printed circuit (32) is formed in such a way that the distance between signal transmitter (26) and sensor device (34) is minimal, in particular less than 2.5 mm, preferably less than or equal to 2 mm.

6. Electric motor (10) according to one of the preceding claims, **characterized in that** a plastic part, in particular the cover, which is fitted with at least the sensor device (34) and is produced by three-dimensional injection-moulded circuit mounting technology (MID, moulded interconnected device), is formed in such a way that the distance between the signal transmitter (26) and the sensor device (34) is minimal, in particular less than 2.5 mm, preferably less than or equal to 2 mm.

7. Electric motor (10) according to one of the preceding claims, **characterized in that** the gear mechanism has an inoperative position, in particular corresponding to a park position, in which the distance between the conversion gear mechanism and the signal transmitter (34) is at a maximum.

8. Electric motor (10) according to one of the preceding claims, **characterized in that** the gear mechanism has an inoperative position, in particular corresponding to a park position, in which the distance between the signal transmitter (26) and the sensor device (34) is a minimum.

9. Electric motor (10) according to one of Claims 3 to 8, **characterized in that** the conversion gear mechanism is composed of a non-magnetic material.

## Revendications

1. Moteur électrique (10), notamment moteur d'essuie-glace de véhicule automobile, comportant une transmission installée dans un boîtier (28), cette transmission ayant au moins une roue à vis (14) et une transmission de conversion de mouvement (16, 18, 21), un couvercle fermant le boîtier de transmission (28) et une électronique de commande ayant une installation de capteur (34) détectant la position de la transmission pour saisir les signaux d'un générateur de signaux (26) installé sur ou dans une partie mobile (14) de la transmission,
**caractérisé en ce que**
l'installation de capteur saisit sans contact, la position de la transmission, et des éléments de l'installation de capteur (34) sont prévus dans le couvercle ou au moins sur le côté de la transmission tourné vers le couvercle pour que, pendant la fabrication, le boîtier de transmission (28) puisse être garni d'un côté de la roue à vis (14), de la transmission de réduction et de l'installation de capteur (34).

2. Moteur électrique (10) selon la revendication 1,
**caractérisé en ce que**
l'installation de capteur (34) comporte au moins un capteur Hall (34) et le générateur de signaux (26) comporte au moins un aimant générateur.

3. Moteur électrique (10) selon l'une des revendications précédentes,
**caractérisé par**
un axe d'induit (11) ayant une vis (12) entraînant la roue à vis (14) et une transmission de conversion de mouvement installée sur la roue à vis (14) et transformant la rotation de la roue à vis (14) en un mouvement pendulaire de l'axe d'essuie-glace (24), le générateur de signaux (26) et la transmission de conversion étant installés du même côté de la roue à vis (14).

4. Moteur électrique (10) selon l'une des revendications précédentes,
**caractérisé en ce que**
les lignes d'alimentation électriques de l'installation de capteur (34) sont formées pour que la distance entre le générateur de signaux (26) et l'installation de capteur (34) soit notamment inférieure à 2,5 mm et de préférence inférieure ou égale à 2 mm.

5. Moteur électrique (10) selon l'une des revendications précédentes,
**caractérisé en ce qu'**
une plaque de circuit (32), notamment souple, est formée pour que la distance entre le générateur de signaux (26) et l'installation de capteur (34) soit minimale et notamment inférieure à 2,5 mm et de préférence inférieure ou égale à 2 mm.

6. Moteur électrique (10) selon l'une des revendications précédentes,
**caractérisé en ce qu'**
une pièce en matière plastique, notamment le couvercle, porte au moins l'installation de capteur (34) et est réalisée en technique de support de circuit injecté dans l'espace (MID) en étant formée pour que la distance entre le générateur de signaux (26) et l'installation de capteur (34) soit minimale, notamment inférieure à 2,5 mm et de préférence inférieure ou égale à 2 mm.

7. Moteur électrique (10) selon l'une des revendications précédentes,
**caractérisé en ce que**
la transmission présente une position de repos, notamment une position correspondant à la position de rangement pour laquelle la distance entre la transmission de conversion et le générateur de signal (34) est maximale.

8. Moteur électrique (10) selon l'une quelconque des revendications précédentes,
**caractérisé en ce que**
la transmission possède une position de repos correspondant notamment à une position de rangement pour laquelle la distance entre le générateur de signaux (26) et l'installation de capteur (34) est minimale.

9. Moteur électrique (10) selon l'une des revendications 3 à 8,
**caractérisé en ce que**
la transmission de conversion de mouvement est en une matière amagnétique.
